# EUROPÄISCHE PATENTSCHRIFT

(11) **EP 2 390 035 B1**
(45) Veröffentlichungstag und Bekanntmachung des Hinweises auf die Patenterteilung: **26.02.2020**
(21) Anmeldenummer: 11004239.7
(22) Anmeldetag: 23.05.2011
(51) Int. Cl.: B23D 57/00, B23D 61/18

(54) **Verwendung einer Handseilsäge zum Sägen von Werkstücken aus Isolierstoff, Weichfaserstoff oder Styropor**
The use of a manual wire saw for sawing workpieces made of insulating material, soft fibre material or styropor
Utilisation d'une scie manuelle à fil pour le sciage d'une pièce en matériau isolant, en fibre douce ou en styropor

(30) Priorität: 28.05.2010 DE 102010021959
(43) Veröffentlichungstag der Anmeldung: 30.11.2011
(73) Patentinhaber: Mafell AG, 78727 Oberndorf a.N. (DE)
(72) Erfinder: Eisenbeis, Dieter, 72160 Horb-Obertalheim (DE); Schellhammer, Karl, 72172 Sulz-Fischingen (DE)
(74) Vertreter: Manitz Finsterwald Patent- und Rechtsanwaltspartnerschaft mbB

(56) Entgegenhaltungen:
- DE-A1- 2 400 205
- DE-U1- 20 006 538
- US-A- 1 967 117
- US-A- 2 696 228

## Beschreibung

Die vorliegende Erfindung betrifft die Verwendung einer Sägevorrichtung zum Sägen von Werkstücken aus Isolierstoff, Weichfaserstoff oder Styropor.

Um Werkstücke wie Holz-, Kunststoff- oder Metallteile in einem unterbrechungsfreien Schnitt zu zerteilen, werden beispielsweise Bandsägen eingesetzt, bei welchen ein flexibles, zu einem geschlossenen Ring verschweißtes Sägeblatt über Rollen umläuft. Aufgrund der Flexibilität des Sägeblatts können mit derartigen Bandsägen nicht nur gerade Schnitte, sondern in gewissem Ausmaß auch gekrümmt verlaufende Schnitte durchgeführt werden.

Da das Sägeband jedoch grundsätzlich flächig ausgestaltet ist, sind beliebige Relativbewegungen zwischen dem Werkstück und der Bandsäge während des Sägens nicht möglich. Die Möglichkeit zum Sägen eines bestimmten Musters oder Profils ist daher bei einer Bandsäge oft nicht gegeben.

Die US 2 696 228 A offenbart eine tragbare Seilsäge für Forst- und Baumpflegearbeiten, welche ein endloses Trägerseil umfasst, an welchem mehrere Schneidelemente drehbar angebracht sind. Die US 2 696 228 A offenbart die Verwendung einer Sägevorrichtung nach dem Oberbegriff des Anspruchs 1.

Die DE 24 00 205 A1 offenbart die Verwendung einer stationären Seilsägemaschine zum Zertrennen eines aus Schaumstoff bestehenden Körpers.

In der US 1 967 117 A ist ein Sägeseil zur Verwendung in einer Kohlenmine offenbart. Das Sägeseil umfasst einen Satz von Schneidelementen, welche drehbar und verkippbar auf dem zugehörigen Trägerseil sitzen. Die Schneidelemente werden durch zwischen ihnen angeordnete Abstandhalter gehalten.

Die DE 200 06 538 U1 offenbart eine Seilsägemaschine zum Durchtrennen von Mauerwerk und Beton, die ein Sägeseil mit Schneidperlen umfasst.

Es ist eine Aufgabe der Erfindung, ein verbessertes spanendes Trennen von Werkstücken aus Isolierstoff, Weichfaserstoff oder Styropor in beliebiger Schnittführung und insbesondere im unterbrechungsfreien Schnitt zu ermöglichen.

Die Lösung der Aufgabe erfolgt durch die Verwendung einer Sägevorrichtung gemäß Anspruch 1.

Erfindungsgemäß wird zum Sägen von Werkstücken aus Isolierstoff, Weichfaserstoff oder Styropor eine Sägevorrichtung verwendet, die als Handseilsäge ausgebildet ist und umfasst:
ein Sägeseil mit einem Trägerseil und mehreren an dem Trägerseil angebrachten, insbesondere identisch ausgeführten, Schneidelementen, welche jeweils einstückig ausgebildet sind und wenigstens eine sich um das Trägerseil herum erstreckende Schneide aufweisen,
wenigstens eine motorisch antreibbare Antriebsscheibe und zumindest eine von der Antriebsscheibe beabstandet angeordnete Umlenkscheibe für das Sägeseil, wobei das Sägeseil als geschlossene Schleife ausgebildet ist und im Sägebetrieb um die Antriebsscheibe und die Umlenkscheibe umläuft.

Die Verwendung einer derartigen Vorrichtung ermöglicht ein Sägen mit kontinuierlichem unterbrechungsfreiem Schnitt ähnlich wie bei einer Bandsäge, wobei jedoch aufgrund der quasi-eindimensionalen Ausbildung des Trägerseils sowie der Isotropie der Schneidelemente ein Sägen in allen Richtungen möglich ist. Die Tiefe, bis zu der das Sägeseil in einer Ebene senkrecht zur Längserstreckung des Sägeseils gesehen in ein Werkstück eingeführt werden kann, ist dabei durch den Durchmesser der Antriebsscheibe sowie der Umlenkscheibe gegeben.

Die Schneide sorgt für ein zuverlässiges spanendes Trennen des zu bearbeitenden Werkstücks. Ein spanender Materialabtrag mittels einer geometrisch definierten Schneide ermöglicht insbesondere exaktere Schnitte als ein eher schleifender oder schlagender Materialabtrag. Dadurch, dass sich die Schneide um das Trägerseil herum erstreckt, kann im Prinzip in jeder bezüglich der Seilachse radialen Richtung gesägt werden. Da das Trägerseil einschließlich der angebrachten Schneidelemente keine flächige Ausdehnung aufweist, sondern gewissermaßen eindimensional ist, können Schnitte mit beliebigem Verlauf ausgeführt werden. Insbesondere ermöglicht das Sägeseil die Durchführung stark gekrümmter oder abrupte Richtungswechsel aufweisender Schnitte. Es kann also sozusagen "um die Ecke" gesägt werden. Dies ist insbesondere beim Durchführen so genannter Ausplattungen ein wesentlicher Vorteil. Sofern zwei Schneiden an jedem Schneidelement vorgesehen sind, welche in entgegengesetzten Richtungen in Bezug auf die Seilachse wirken, kann das Sägeseil gleichermaßen in beiden axialen Richtungen verwendet werden, d.h. es kann gewissermaßen vorwärts und rückwärts gesägt werden.

Demgemäß ist bei einem möglichen Ausführungsbeispiel der Erfindung vorgesehen, dass die Schneidelemente jeweils mit zwei in entgegengesetzte Richtungen wirkenden Schneiden versehen sind, die bevorzugt identisch ausgeführt oder an unterschiedliche Anwendungen und/oder Zwecke angepasst sind.

Vorzugsweise erstrecken sich die Schneiden jeweils über 360° um das Trägerseil herum und sind insbesondere isotrop ausgebildet. Es spielt dann grundsätzlich keine Rolle, in welcher Richtung quer zu der Achse des Trägerseils die Schnittführung erfolgt.

Gemäß einer Ausführungsform weisen die Schneidelemente jeweils einen die Schneide bildenden und einen Keilwinkel definierenden Keilabschnitt auf. Der Keilabschnitt kann direkt an das zugehörige Schneidelement angeformt sein oder alternativ ein separates Teil bilden. Der Keilwinkel kann an die jeweilige Anwendung angepasst sein und insbesondere unter Berücksichtigung der Schneidkraft und der Stabilität der Schneide ausgewählt werden. Bei einer bevorzugten Ausführungsform beträgt der Keilwinkel etwa 20°.

Weiterhin können die Schneiden jeweils einen Freiwinkel und/oder einen Spanwinkel definieren. Unter der Berücksichtigung, dass Keilwinkel, Freiwinkel und Spanwinkel zusammen stets 90° ergeben, kann auch der Freiwinkel und/oder der Spanwinkel auf die jeweilige Anwendung abgestimmt sein. Im Gegensatz zu einem schleifenden Trennen von Werkstücken kann mittels eines Schneidkeils eine wesentlich größere Schnittqualität erzielt werden.

Gemäß einer Ausführungsform ist zwischen der Schneide und dem Trägerseil jedes Schneidelements ein, insbesondere für eine Späneumlenkung sorgender, Spänetransportabschnitt ausgebildet. Die Späne können somit während des Sägebetriebs vom Schneidelement bzw. vom Trägerseil weggeführt werden, um so ein Hängenbleiben der Späne, eine Verstopfung des Sägespalts und eine dementsprechende Verringerung der Schneidqualität zu verhindern.

Insbesondere kann eine Wange eines jeweils die Schneide bildenden Keilabschnitts gekrümmt ausgebildet sein. Ein abgetrennter Span wird bei einer derartigen Ausgestaltung durch die Krümmung gezielt umgelenkt und in einer unkritischen Richtung abtransportiert.

Gemäß einer Ausgestaltung sind die Schneiden jeweils durch wenigstens eine, insbesondere zum Spanbrechen dienende, Aussparung unterbrochen. Es können auch mehrere, insbesondere gleichmäßig verteilt angeordnete Aussparungen vorgesehen sein. Derartige Aussparungen in der Schneide wirken spanbrechend und erhöhen somit die Schnittqualität.

Vorzugsweise sind die Schneidelemente jeweils auf das Trägerseil aufgepresst. Dies ermöglicht eine besonders einfache Herstellung.

Vorzugsweise sind die Schneidelemente jeweils hülsen- oder ringförmig ausgebildet. Derartige hülsen- oder ringförmigen Schneidelemente können beispielsweise auf das Trägerseil aufgefädelt und anschließend mittels eines Crimpwerkzeugs auf dieses aufgepresst werden. Hülsen- oder ringförmige Bauteile sind besonders einfach und kostengünstig herzustellen.

Vorzugsweise weisen die Schneidelemente jeweils einen kreisförmigen Querschnitt auf. Eine kreisförmige Schneide ermöglicht ein zuverlässiges allseitiges Sägen quer zu der Achse des Trägerseils. Darüber hinaus sind Bauteile mit kreisförmigem Querschnitt besonders einfach herzustellen.

Gemäß einer weiteren Ausführungsform umfassen die Schneidelemente jeweils einen, bevorzugt zur Befestigung am Trägerseil dienenden, zylindrischen Basisabschnitt, an den sich ein sich radial nach außen erweiternder, die Schneide umfassender Arbeitsabschnitt anschließt. Die Schneidelemente können im Bereich des Basisabschnitts auf das Trägerseil aufgepresst sein, während ein Arbeitsabschnitt in Form eines Schneidkeils schräg nach außen von dem Basisabschnitt und somit von dem Trägerseil absteht.

Die Schneidelemente können jeweils über zumindest im Wesentlichen ihre gesamte Länge einen konstanten Innenquerschnitt aufweisen. Beim Aufpressen auf das Trägerseil kann somit eine besonders gleichmäßige Klemmwirkung erzielt werden.

Des Weiteren können die Schneidelemente jeweils an wenigstens einer Stirnseite einen, insbesondere abgerundeten oder sich trichter- oder trompetenartig erweiternden, Seilführungsabschnitt aufweisen. Durch einen derartigen Seilführungsabschnitt kann die Haltbarkeit des Trägerseils gesteigert werden. Wenn das Trägerseil nämlich z.B. um eine Umlenkscheibe oder Umlenkrolle umläuft, erfährt es durch die wechselnde Krümmung beim Ein- und Auslauf eine Belastung, die an den Übergangsstellen zwischen den Schneidelementen und den freien Seilabschnitten besonders groß ist. Die an diesen Stellen auftretenden knickartigen Belastungen können durch den Seilführungsabschnitt verringert werden, indem dieser den Seilverlauf glättet und ein besseres Abrollen ermöglicht.

Weiterbildungen der Erfindung sind auch in den abhängigen Ansprüchen, der Beschreibung sowie den Zeichnungen angegeben.
Die Erfindung wird nachfolgend beispielhaft unter Bezugnahme auf die Zeichnungen beschrieben.
- Fig. 1: zeigt eine vereinfachte Darstellung einer Sägevorrichtung, die ein Sägeseil, eine Antriebsscheibe und eine Umlenkscheibe für das Sägeseil umfasst.
- Fig. 2: zeigt eine dreidimensionale Ansicht eines Schneidelements des Sägeseils gemäß Fig. 1.
- Fig. 3: zeigt eine Seitenansicht des Schneidelements gemäß Fig. 2.
- Fig. 4: zeigt eine seitliche Schnittansicht des Schneidelements gemäß Fig. 2.
- Fig. 5: zeigt eine Vorderansicht des Schneidelements gemäß Fig. 2.
- Fig. 6: zeigt eine weitere Ausführungsform eines Schneidelementes.

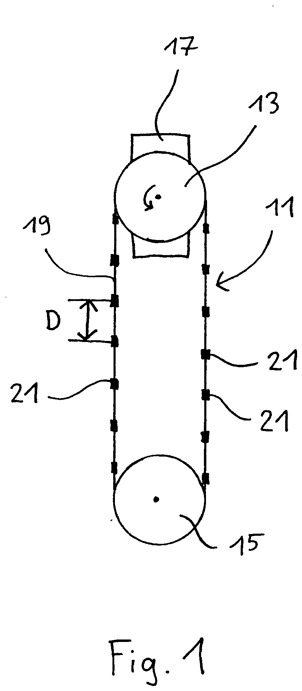

Gemäß Fig. 1 umfasst eine Sägevorrichtung ein Sägeseil 11, welches als geschlossene Schleife ausgebildet ist und während des Sägebetriebs um eine Antriebsscheibe 13 und um eine Umlenkscheibe 15 umläuft. Das Sägeseil 11 kann in jeweiligen nicht dargestellten Nuten der Antriebsscheibe 13 und der Umlenkscheibe 15 geführt sein. Vorzugsweise sind die Antriebsscheibe 13 und die Umlenkscheibe 15 aus schwer zerspanbarem Kunststoff hergestellt und austauschbar. Die Antriebsscheibe 13 wird durch einen Motor 17, bei welchem es sich vorzugsweise um einen drehzahlgeregelten Elektromotor handelt, drehend angetrieben, wie in Fig. 1 durch einen Pfeil dargestellt ist. Weitere Komponenten der Sägevorrichtung sind in Fig. 1 nicht im einzelnen dargestellt, da sie dem Fachmann geläufig sind. Beispielsweise können die Antriebsscheibe 13, die Umlenkscheibe 15 sowie der Motor 17 an einem Rahmen oder Gestell angebracht sein. Teile des Sägeseils 11 können ferner durch eine Schutzhaube abgedeckt sein. Die Sägevorrichtung ist als Handseilsäge ausgebildet und weist zu diesem Zweck geeignete Halte- und Bedienungsgriffe auf.

Das Sägeseil 11 besteht aus einem Trägerseil 19 sowie mehreren identisch ausgeführten und in gleichmäßigem Abstand D an dem Trägerseil 19 angebrachten Schneidelementen 21, die alternativ auch ungleichmäßig beabstandet angebracht sein können. Um die erforderliche Stabilität und Haltbarkeit zu gewährleisten, ist das Trägerseil 19 vorzugsweise ein feingliedriges Drahtseil. Beispielsweise kann eine Rundlitze oder ein Rundlitzenseil aus Stahl als Trägerseil dienen. Je nach Anwendungsvorgabe kann auch ein ummanteltes Drahtseil vorgesehen sein, beispielsweise eine Rundlitze mit Polyamidüberzug. Alternativ könnte auch ein einzelner Stahldraht als Trägerseil eingesetzt werden. Der Durchmesser des Trägerseils richtet sich nach der jeweiligen Anwendung. Im dargestellten Beispiel beträgt er 1,5 mm.

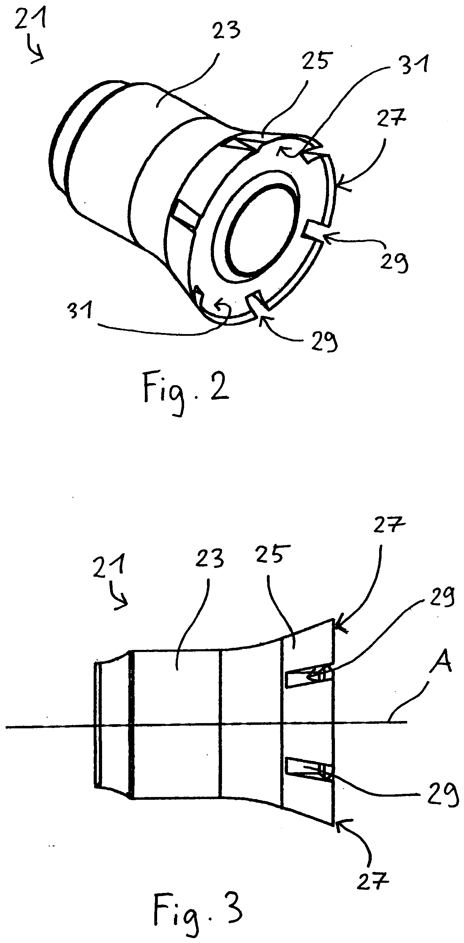

In den Fig. 2 bis 5 ist ein Schneidelement 21 des Sägeseils 11 im Detail dargestellt. Das Schneidelement 21 ist im Wesentlichen hülsenförmig und weist einen kreisförmigen Querschnitt auf. In einem am Trägerseil 19 angebrachten Zustand ist das Schneidelement 21 also rotationssymmetrisch in Bezug auf die Seilachse A. Das hülsenförmige Schneidelement 21 umfasst einen im Wesentlichen zylindrischen Basisabschnitt 23, an welchen sich ein sich in Bezug auf die Seilachse A (Fig. 3) radial nach außen erweiternder Arbeitsabschnitt 25 anschließt. Der Arbeitsabschnitt 25 definiert eine keilförmige Schneide 27, welche sich über 360° um das Trägerseil 19 herum erstreckt. Die Schneide 27 ist dabei lediglich durch mehrere gleichmäßig verteilt angeordnete Spanbrechernuten 29 unterbrochen, welche zur Erhöhung der Schnittqualität vorgesehen sind. Im Vergleich zur Gesamtlänge der Schneide 27 sind die Spanbrechernuten 29 relativ schmal, so dass sich keine wesentliche Einschränkung der radial allseitigen Schneidfähigkeit des Schneidelements 21 ergibt. Vorzugsweise sind die Schneidelemente aus Stahl, z.B. aus Automatenstahl, gefertigt und weisen eine gehärtete Oberfläche auf.

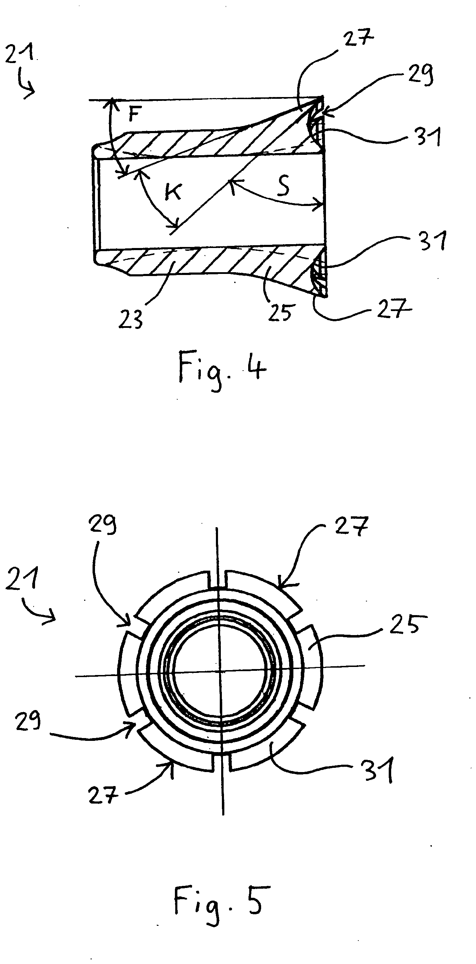

Die Schneide 27 definiert einen in Fig. 4 eingezeichneten Keilwinkel K, der im dargestellten Ausführungsbeispiel 20° beträgt. Ferner schließt die Schneide 27 einen Freiwinkel F mit dem Trägerseil 19 ein und definiert einen Spanwinkel S. Keilwinkel K, Freiwinkel F und Spanwinkel S ergeben zusammen 90°. Grundsätzlich können der Keilwinkel K, der Freiwinkel F und/oder der Spanwinkel S variiert werden, um das Schneidelement 21 an eine bestimmte Anwendung anzupassen.

Wie aus Fig. 4 hervorgeht, ist eine dem Trägerseil 19 zugewandte Wange 31 der Schneide 27 gekrümmt ausgebildet. Sie dient somit als Spänetransportabschnitt, durch welchen die Späne während des Sägebetriebs für einen verbesserten Abtransport umgelenkt werden, um so ein Hängenbleiben von Spänen im Sägespalt und zwischen Trägerseil 19 und Schneidelementen 21 zu verhindern.

Bei der dargestellten Ausführungsform weisen die Schneidelemente 21 über zumindest im Wesentlichen ihre gesamte Länge einen konstanten Innenquerschnitt auf. Um jedoch die Belastung des Trägerseils 19 bei einem Umlaufen um die Antriebsscheibe 13 und um die Umlenkscheibe 15 zu verringern, kann an einer oder an beiden Stirnseiten des Schneidelements 21 ein abgerundeter oder sich trichter- oder trompetenartig erweiternder Seilführungsabschnitt vorgesehen sein, der in Fig. 4 an beiden Stirnseiten jeweils durch gestrichelte Linien angedeutet ist.

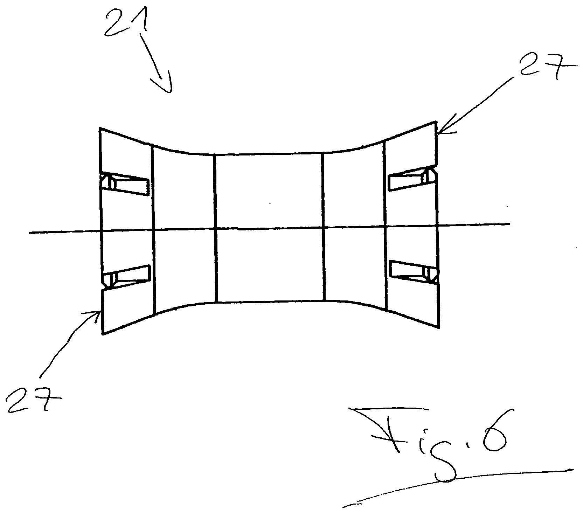

Fig. 6 zeigt eine alternative Ausführungsform eines Schneidelementes, bei dem zwei Schneiden 27 vorgesehen sind, welche in entgegengesetzten Richtungen in Bezug auf die Seilachse wirken. Die Schneiden 27 können identisch ausgeführt sein, wobei alternativ die Schneiden 27 aber auch unterschiedlich ausgebildet sein können, um unterschiedlichen Anwendungen, z.B. unterschiedlichen zu sägenden Materialien, Rechnung zu tragen. Ein mit solchen Schneidelementen ausgestattetes Sägeseil kann gleichermaßen in beiden axialen Richtungen verwendet werden, d.h. es kann mit dem Sägeseil vorwärts und rückwärts gesägt werden. Dabei kann die "Vorwärts-Schneide" auf ein erstes Material und die "Rückwärts-Schneide" auf ein zweites Material abgestimmt sein.

Zum Herstellen des Sägeseils 11 werden die Schneidelemente 21 perlenschnurartig in jeweils gleicher Ausrichtung auf das Trägerseil 19 aufgereiht und mittels eines Crimpwerkzeugs jeweils im Abstand D auf das Trägerseil 19 aufgepresst. Anschließend wird das Trägerseil 19 zu einer geschlossenen Schleife verbunden und auf die Anordnung aus Antriebsrolle 13 und Umlenkrolle 15 (Fig. 1) aufgespannt.

Die Sägevorrichtung eignet sich insbesondere zum exakten Sägen von Werkstücken aus Isolierstoff, Weichfaserstoff oder Styropor. Je nach Ausgestaltung des Sägeseils 11 können, nicht erfindungsgemäß, jedoch auch Werkstücke aus anderen Materialien gesägt werden. Zweckmäßigerweise beträgt der maximale Außendurchmesser der Schneidelemente 21 nur wenige Millimeter, z.B. 2 bis 4 mm, sodass sich ein dementsprechend dünner Schneidspalt ergibt und gegenüber einem herkömmlichen flächigen Sägeblatt praktisch ein eindimensionales Werkzeug vorliegt. Demgemäß können beliebig geformte Schnitte durchgeführt werden, d.h. mit dem erfindungsgemäßen Sägeseil kann - bezogen auf zur Achse A des Sägeseils 11 radiale Richtungengewissermaßen isotrop gesägt werden, und zwar sowohl in entlang einer Führungsschiene geführten Schnitten als auch in Freihandschnitten.

### Bezugszeichenliste

- 11: Sägeseil
- 13: Antriebsscheibe
- 15: Umlenkscheibe
- 17: Motor
- 19: Trägerseil
- 21: Schneidelement
- 23: Basisabschnitt
- 25: Arbeitsabschnitt
- 27: keilförmige Schneide
- 29: Spanbrechernut
- 31: gekrümmte Wange

- D: Abstand
- A: Seilachse
- K: Keilwinkel
- F: Freiwinkel
- S: Spanwinkel

## Patentansprüche

1. Verwendung einer Sägevorrichtung die als Handseilsäge ausgebildet ist und umfasst:
ein Sägeseil (11) mit einem Trägerseil (19) und mehreren an dem Trägerseil (19) angebrachten, insbesondere identisch ausgeführten, Schneidelementen (21), welche jeweils wenigstens eine sich um das Trägerseil (19) herum erstreckende Schneide (27) aufweisen, wenigstens eine motorisch antreibbare Antriebsscheibe (13), und
zumindest eine von der Antriebsscheibe (13) beabstandet angeordnete Umlenkscheibe (15) für das Sägeseil (11),
wobei das Sägeseil (11) als geschlossene Schleife ausgebildet ist und im Sägebetrieb um die Antriebsscheibe (13) und die Umlenkscheibe (15) umläuft, **dadurch gekennzeichnet, dass** die Sägevorrichtung zum Sägen von Werkstücken aus Isolierstoff, Weichfaserstoff oder Styropor verwendet wird.

2. Verwendung nach Anspruch 1,
**dadurch gekennzeichnet, dass**
sich die Schneiden (27) jeweils über 360° um das Trägerseil (19) herum erstrecken und insbesondere isotrop ausgebildet sind.

3. Verwendung nach Anspruch 1 oder 2,
**dadurch gekennzeichnet, dass**
die Schneidelemente (21) jeweils einen die Schneide (27) bildenden und einen Keilwinkel (K) definierenden Keilabschnitt aufweisen.

4. Verwendung nach zumindest einem der vorstehenden Ansprüche,
**dadurch gekennzeichnet, dass**
die Schneiden (27) jeweils einen Freiwinkel (F) und/oder einen Spanwinkel (S) definieren.

5. Verwendung nach zumindest einem der vorstehenden Ansprüche,
**dadurch gekennzeichnet, dass**
zwischen der Schneide (27) und dem Trägerseil (19) jedes Schneidelementes (21) ein, insbesondere für eine Späneumlenkung sorgender, Spänetransportabschnitt ausgebildet ist.

6. Verwendung nach zumindest einem der vorstehenden Ansprüche,
**dadurch gekennzeichnet, dass**
eine Wange (31) eines jeweils die Schneide (27) bildenden Keilabschnitts gekrümmt ausgebildet ist.

7. Verwendung nach zumindest einem der vorstehenden Ansprüche,
**dadurch gekennzeichnet, dass**
die Schneiden (27) jeweils durch wenigstens eine, insbesondere zum Spanbrechen dienende, Aussparung (29) unterbrochen sind.

8. Verwendung nach zumindest einem der vorstehenden Ansprüche,
**dadurch gekennzeichnet, dass**
eine Mehrzahl von insbesondere gleichmäßig verteilt angeordneten Aussparungen (29) vorgesehen sind.

9. Verwendung nach zumindest einem der vorstehenden Ansprüche,
**dadurch gekennzeichnet, dass**
die Schneidelemente (21) jeweils auf das Trägerseil (19) aufgepresst sind.

10. Verwendung nach zumindest einem der vorstehenden Ansprüche,
**dadurch gekennzeichnet, dass**
die Schneidelemente (21) jeweils hülsen- oder ringförmig ausgebildet sind.

11. Verwendung nach zumindest einem der vorstehenden Ansprüche,
**dadurch gekennzeichnet, dass**
die Schneidelemente (21) jeweils einen kreisförmigen Querschnitt aufweisen.

12. Verwendung nach zumindest einem der vorstehenden Ansprüche,
**dadurch gekennzeichnet, dass**
die Schneidelemente (21) jeweils einen, bevorzugt zur Befestigung am Trägerseil (19) dienenden, zylindrischen Basisabschnitt (23) umfassen, an den sich ein sich radial nach außen erweiternder, die Schneide (27) umfassender Arbeitsabschnitt (25) anschließt.

13. Verwendung nach zumindest einem der vorstehenden Ansprüche,
**dadurch gekennzeichnet, dass**
die Schneidelemente (21) jeweils über zumindest im Wesentlichen ihre gesamte Länge einen konstanten Innenquerschnitt aufweisen.

14. Verwendung nach zumindest einem der vorstehenden Ansprüche,
**dadurch gekennzeichnet, dass**
die Schneidelemente (21) jeweils an wenigstens einer Stirnseite einen, insbesondere abgerundeten oder sich trichter- oder trompetenartig erweiternden, Seilführungsabschnitt aufweisen.

## Claims

1. Use of a sawing apparatus
which is configured as a hand wire saw
and which comprises:
a saw wire (11) having a carrier wire (19) and having a plurality of cutting elements, in particular identically designed cutting elements (21), which are attached to the carrier wire (19) and which each have at least one cutting edge (27) extending around the carrier wire (19);
at least one drive pulley (13) which can be driven by a motor; and
at least one deflection pulley (15) for the saw wire (11), said deflection pulley (15) being arranged spaced apart from the drive pulley (13),
wherein the saw wire (11) is formed as a closed loop and runs around the drive pulley (13) and the deflection pulley (15) in the sawing operation, **characterized in that** the sawing apparatus is used for sawing workpieces composed of insulating material, soft fiber material or polystyrene.

2. Use in accordance with claim 1,
**characterized in that**
the cutting edges (27) each extend over 360° around the carrier wire (19) and are in particular isotropic.

3. Use in accordance with claim 1 or claim 2,
**characterized in that**
the cutting elements (21) each have a wedge section which forms the cutting edge (27) and defines a wedge angle (K).

4. Use in accordance with at least one of the preceding claims,
**characterized in that**
the cutting edges (27) each define a clearance angle (F) and/or a rake angle (S).

5. Use in accordance with at least one of the preceding claims,
**characterized in that**
a chip transport section, which in particular provides for a chip deflection, is formed between the cutting edge (27) and the carrier wire (19) of each cutting element (21).

6. Use in accordance with at least one of the preceding claims,
**characterized in that**
a cheek (31) of a wedge section forming the respective cutting edge (27) is curved.

7. Use in accordance with at least one of the preceding claims,
**characterized in that**
the cutting edges (27) are each interrupted by at least one cut-out (29) which in particular serves for chip breaking.

8. Use in accordance with at least one of the preceding claims,
**characterized in that**
a plurality of cut-outs (29) are provided which are in particular arranged uniformly distributed.

9. Use in accordance with at least one of the preceding claims,
**characterized in that**
the cutting elements (21) are each pressed onto the carrier wire (19).

10. Use in accordance with at least one of the preceding claims,
**characterized in that**
the cutting elements (21) are each sleeve-shaped or ring-shaped.

11. Use in accordance with at least one of the preceding claims,
**characterized in that**
the cutting elements (21) each have a circular cross-section.

12. Use in accordance with at least one of the preceding claims,
**characterized in that**
the cutting elements (21) each comprise a cylindrical base section (23) which preferably serves for fastening to the carrier wire (19) and which is adjoined by a radially outwardly expanding work section (25) comprising the cutting edge (27).

13. Use in accordance with at least one of the preceding claims,
**characterized in that**
the cutting elements (21) each have a constant inner cross-section over at least substantially their total length.

14. Use in accordance with at least one of the preceding claims,
**characterized in that**
the cutting elements (21) each have a wire guidance section, which is in particular rounded or expands in a funnel-like or trumpet-like manner, at at least one end face.

## Revendications

1. Utilisation d'un dispositif de sciage réalisé sous forme de scie à câble et comprenant :
un câble de sciage (11) pourvu d'un câble porteur (19) et de plusieurs éléments de coupe (21) montés sur le câble porteur (19) et réalisés en particulier de façon identique, qui présentent chacun au moins un tranchant (27) s'étendant autour du câble porteur (19),
au moins une poulie d'entraînement (13) susceptible d'être entraînée par voie motrice, et
au moins une poulie de renvoi (15) pour le câble de sciage (11), qui est disposée en étant espacée de ladite poulie d'entraînement (13),
dans laquelle
le câble de sciage (11) est réalisé en boucle fermée et tourne, en mode de sciage, autour de la poulie d'entraînement (13) et de la poulie de renvoi (15),
**caractérisée en ce que**
le dispositif de sciage est utilisé pour scier des pièces en matériau isolant, en matériau de fibres souples ou en polystyrène.

2. Utilisation selon la revendication 1,
**caractérisée en ce que**
les tranchants (27) s'étendent chacun sur 360° autour du câble porteur (19) et sont en particulier de conception isotrope.

3. Utilisation selon la revendication 1 ou 2,
**caractérisée en ce que**
les éléments de coupe (21) présentent chacun une portion en coin formant le tranchant (27) et définissant un angle de coin (K).

4. Utilisation selon l'une au moins des revendications précédentes,
**caractérisée en ce que**
les tranchants (27) définissent chacun un angle de dégagement (F) et/ou un angle de coupe (S).

5. Utilisation selon l'une au moins des revendications précédentes,
**caractérisée en ce que**
une portion de transport des copeaux assurant en particulier un renvoi des copeaux est réalisée entre le tranchant (27) et le câble porteur (19) de chaque élément de coupe (21).

6. Utilisation selon l'une au moins des revendications précédentes,
**caractérisée en ce que**
une joue (31) d'une portion en coin formant le tranchant (27) est réalisée de façon courbée.

7. Utilisation selon l'une au moins des revendications précédentes,
**caractérisée en ce que**
les tranchants (27) sont interrompues chacun par au moins un évidement (29) servant en particulier à la rupture des copeaux.

8. Utilisation selon l'une au moins des revendications précédentes,
**caractérisée en ce que**
il est prévu une pluralité d'évidements (29) disposés en particulier en répartition régulière.

9. Utilisation selon l'une au moins des revendications précédentes,
**caractérisée en ce que**
les éléments de coupe (21) sont chacun pressés sur le câble porteur (19).

10. Utilisation selon l'une au moins des revendications précédentes,
**caractérisée en ce que**
les éléments de coupe (21) sont chacun réalisés sous forme de manchon ou d'anneau.

11. Utilisation selon l'une au moins des revendications précédentes,
**caractérisée en ce que**
les éléments de coupe (21) présentent chacun une section transversale de forme circulaire.

12. Utilisation selon l'une au moins des revendications précédentes,
**caractérisée en ce que**
les éléments de coupe (21) comprennent chacun une portion de base (23) cylindrique, servant de préférence à la fixation au câble porteur (19), suivie d'une portion de travail (25) qui s'élargit radialement vers l'extérieur et qui comprend le tranchant (27).

13. Utilisation selon l'une au moins des revendications précédentes,
**caractérisée en ce que**
les éléments de coupe (21) présentent chacun une section transversale intérieure constante sur au moins sensiblement toute leur longueur.

14. Utilisation selon l'une au moins des revendications précédentes,
**caractérisée en ce que**
les éléments de coupe (21) présentent chacun sur au moins une face frontale une portion de guidage de câble qui est en particulier arrondie ou qui s'élargit en forme d'entonnoir ou de trompette.
